# EUROPEAN PATENT APPLICATION

(11) **EP 3 576 247 A1**
(43) Date of publication of application: **04.12.2019**
(21) Application number: 19177133.6
(22) Date of filing: 28.05.2019
(51) Int. Cl.: H02J 7/00, H01R 13/22

(54) **SYSTEMS AND METHODS FOR CHARGING ONE OR MORE ELECTRONIC DEVICES**

(30) Priority: 01.06.2018 US 201815995897
(71) Applicant: Flag Acquisition, LLC, Lake Forest, Illinois 60045 (US)
(72) Inventor: Weinstein, Cliff, Lake Forest, IIlinois 60045 (US); Leffell, Sam, Lake Forest, Illinois 60045 (US); Byun, James, Lake Forest, Illinois 60045 (US); Leahy, Craig, Lake Forest, Illinois 60045 (US)
(74) Representative: Haseltine Lake Kempner LLP

(57) **Abstract**

A portable power bank includes: a housing; a rechargeable battery disposed within the housing; a plurality of contacts disposed on the housing and in electrical communication with the rechargeable battery; and a first connector in electrical communication with the rechargeable battery and configured to be plugged into a port of a first electronic device. The contacts are configured to receive electrical power from a conductive charging pad capable of supplying the electrical power when the contacts are placed on the conductive charging pad. A system including a conductive charging pad and one or more of the portable power banks is also described.

## Description

### FIELD OF INVENTION

The present invention relates to the field of charging electronic devices. More specifically, the present invention is related to systems and methods for charging one or more electronic devices via a portable power bank that can be conductively charged by an external device.

### BACKGROUND

Power banks are known in the art. Power banks typically include a rechargeable battery that can be used to charge an electronic device. Common power banks require charging of the battery. To charge the battery, users must utilize a cable that plugs into an AC receptacle and into the power bank to transfer power from the AC power receptacle to the rechargeable battery. However, use of such a cable can be inconvenient and cumbersome, especially when the power bank is capable of utilizing multiple cables to charge multiple electronic devices.

### SUMMARY

According to an embodiment, a portable power bank includes: a housing; a rechargeable battery disposed within the housing; a plurality of contacts disposed on the housing and in electrical communication with the rechargeable battery; and a first connector in electrical communication with the rechargeable battery and configured to be plugged into a port of a first electronic device. The contacts can be configured to receive electrical power from a conductive charging pad capable of supplying the electrical power when the contacts are placed on the conductive charging pad.

In another embodiment, a system includes a portable power bank and a conductive charging pad. The portable power bank can include: a housing; a rechargeable battery disposed within the housing; a plurality of contacts disposed on the housing and in electrical communication with the rechargeable battery; and a first connector in electrical communication with the rechargeable battery and configured to be plugged into a port of a first electronic device. The conductive charging pad can be configured to provide electrical power to the portable power bank when the contacts of the portable power bank are placed on the conductive charging pad.

Other features and advantages will become apparent from the following description, taken in connection with the accompanying drawings, wherein, by way of illustration and example, embodiments of the invention are disclosed.

### BRIEF DESCRIPTION OF THE DRAWINGS

The foregoing and other features and advantages will be apparent from the following, more particular, description of various exemplary embodiments, as illustrated in the accompanying drawings, wherein like reference numbers generally indicate identical, functionally similar, and/or structurally similar elements.
**FIG. 1** depicts a perspective view of an exemplary portable power bank in accordance with an embodiment of the present invention, shown with a pair of cables and connectors displaced outward from a housing of the portable power bank.
**FIG. 2** depicts a perspective view of the portable power bank of **FIG. 1****,** shown with one cable and connector displaced outward from the housing of the portable power bank and connected to a portable electronic device and the other cable and connector recessed within the housing of the portable power bank.
**FIG. 3** depicts a perspective view of the portable power bank of **FIG. 1****,** shown with both of the cables and connectors recessed within the housing of the portable power bank.
**FIG. 4** depicts a front view of the portable power bank of **FIG. 2****.**
**FIG. 5** depicts a rear view of the portable power bank of **FIG. 2****.**
**FIGs. 6 - 8** depict exemplary systems comprising a conductive charging pad configured to recharge multiple portable power banks in accordance with embodiments of the present invention.

### DETAILED DESCRIPTION

Reference will now be made in detail to various embodiments of the present invention, examples of which are illustrated in the accompanying drawings. It is to be understood that the figures and descriptions of the present invention included herein illustrate and describe elements that are of particular relevance to the present invention. It is also important to note that any reference in the specification to "one embodiment," "an embodiment" or "an alternative embodiment" means that a particular feature, structure or characteristic described in connection with the embodiment is included in at least one embodiment of the invention. As such, the recitation of "in one embodiment" and the like throughout the specification does not necessarily refer to the same embodiment.

Embodiments of the present invention are directed to charging one or more electronic devices. As used herein, the term "electronic device" can refer to portable electronic devices (PED) which are generally powered by electricity or battery. The PED can incorporate one or more rechargeable batteries. Exemplary electronic devices include mobile telephones, personal digital assistants (PDAs), notebook computers, smart phones, hearing aids, music players, handheld game player, video game consoles, remote controls, radios, compact disk players, speakers, headphones, digital cameras, walkie-talkies or other communication devices, etc.

An embodiment of present disclosure relates to a portable power bank for charging one or more electronic devices. The portable power bank can include a rechargeable battery to provide electrical power to the electronic device. The portable power bank can have a housing that is lightweight and/or sized to be portable. The housing can have one or more integrated cables and connectors in electrical communication with the rechargeable battery (e.g., soldered or otherwise connected to the battery) and configured to charge one more electronic devices. The integrated cables and/or connectors can be of similar or different types such that the portable power bank may be compatible with different types of electronic devices. The portable power bank can further include a plurality of contacts in electrical communication with the rechargeable battery. The contacts can be configured to receive electrical power from a conductive charging pad when in contact therewith.

Another embodiment of the present disclosure relates to a system of charging one or more electronic devices. The system can comprise one or more portable power banks as discussed above and a conductive charging pad configured to provide electrical power to each portable power bank. The conductive charging pad can charge multiple portable power banks simultaneously without any charging adapters/cables. As such, the conductive charging pad can provide bulk charging of the portable power banks.

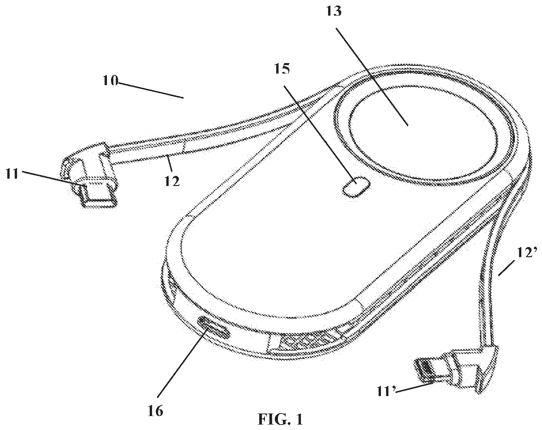

Referring to **FIG. 1****,** an embodiment of a portable power bank (10) for charging one or more electronic devices is shown. The portable power bank (10) can include a housing internally storing a rechargeable battery. The housing can be made of plastic or any other durable material. According to an embodiment, the housing is constructed from a material that does not require adding additional thickness and complexity to the housing. The battery type and size can be changed. For example, the battery can be lithium-polymer, lithium-ion, Ni-Cd, alkaline, etc.

The portable power bank (10) can also comprise one or more cables (12, 12') and/or one or more connectors (11, 11'). The portable power bank (10) can charge multiple PEDs simultaneously via the cables (12, 12') and/or connectors (11, 11'). Each of the connectors (11, 11') can be adapted to be plugged in an electronic device for recharging their internal battery. Each of the connectors (11, 11') can comprise an Apple Lightning, USB - Type A, USB - Type B, USB - Type C, USB - Mini, USB - Micro, or any other type of electronic connector now known or later developed. According to an embodiment, as illustrated, the one or more cables (12, 12') can extend from the housing and be in electrical communication with the rechargeable battery (e.g., soldered or otherwise connected to the battery). The connectors (11, 11') can extend from the cables (12, 12'). For example, the connectors (11, 11') can extend from the ends of the cables (12, 12'), however other locations of the cables (12, 12') and the connectors (11, 11') are possible. According to another embodiment, although not illustrated, the connector(s) (11, 11') can be directly embedded into the housing such that the cables (12, 12') are not required. The connector(s) (11, 11') can then be direct electrical communication with the rechargeable battery.

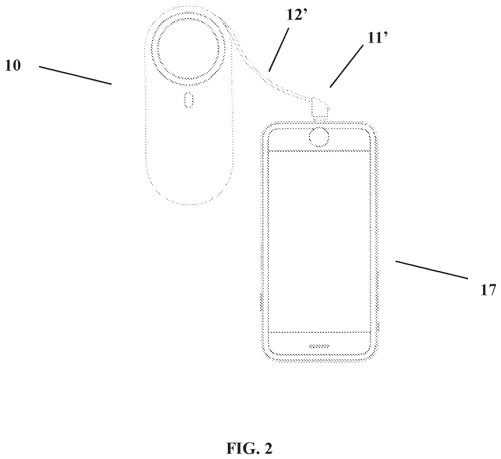

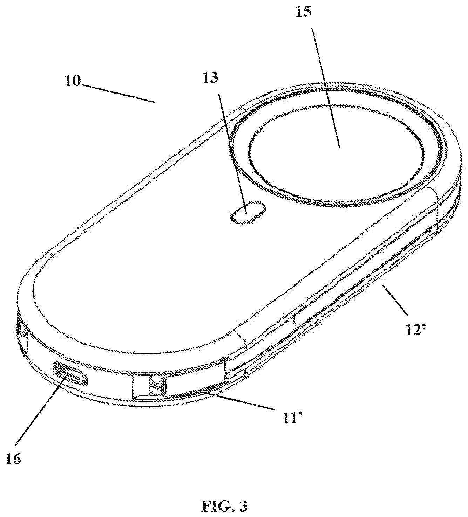

The housing of the power bank (10) can have one or more compartments dimensioned and configured to secure the one or more cables (12, 12') and connectors (11, 11'). The compartment(s) can be provided on the same or different locations on the housing. For example, the compartment(s) can be provided on opposite side walls of the housing. Each compartment can be configured to allow the respective cable (12, 12') and respective connector (11, 11') to be recessed within the compartment, permitting the housing and associated cable/connector to maintain a sleek external shape and appearance. As illustrated in **FIG. 2****,** during use, a user can remove one or more of the cables (12, 12') and/or connectors (11, 11') from their respective compartments to attach to a PED (17). However, as illustrated in **FIGs. 3** - **5****,** the one or more cables (12, 12') with connectors (11, 11') can be adapted to be inserted inside of the compartments of the housing, for example, when the portable power bank is not charging one or more electronic devices. In some embodiments, the compartments can hold the one or more cables (12, 12') and connectors (11, 11') such that they are flush with the side walls when placed in the compartments.

The portable power bank (10) can further comprise a power module disposed within the housing. The power module can be in electrical communication with the rechargeable battery (e.g., soldered or otherwise electrically connected thereto), and can be configured to manage the electrical power with respect to the rechargeable battery. The power module can also be in electrical communication with the one or more cables (12, 12') (e.g., soldered or otherwise electrically connected thereto), and with at least two of the plurality of contacts of the portable power bank (10) as will be discussed in more detail below. This will allow the power module to control electrical power provided to one or more electronic devices connected via the cable(s) (12, 12').

As such, the power module of the portable power bank (10) can control electrical power received from a conductive charging pad and stored by the rechargeable battery. In doing so, the power module can detect and rectify one or more of a voltage requirement and a current requirement of the rechargeable battery. The power module can then buck or boost the voltage from the voltage from the conductive charging pad to meet the requirement(s) of the rechargeable battery. For example, if the conductive power pad is configured to deliver 30 volts, the power module of the portable power bank (10) can buck or boost the 30 volts to the voltage requirement of the rechargeable battery of the power bank (10) (e.g., 2.5 volts). To do so, the power module can receive a potential difference via contacts (16) (illustrated in **FIG. 3**) of the portable power bank (10) when the contacts (16) of the portable power bank (10) are in contact with pads of the conductive power pad having different voltages or currents.

Referring now to **FIG. 3****,** the portable power bank (10) can comprise a charging port (16). The charging port (16) can permit the rechargeable battery of the portable power bank (10) to be charged by an external device capable of providing electrical power. The charging port (16) can comprise an Apple Lightning, USB - Type A, USB - Type B, USB - Type C, USB - Mini, USB - Micro, or any other type now known or later developed. Alternatively, although not illustrated, the portable power bank (10) can be made without the charging port (16) such that the power bank can only be charged via a conductive charging pad as will be discussed in more detail below.

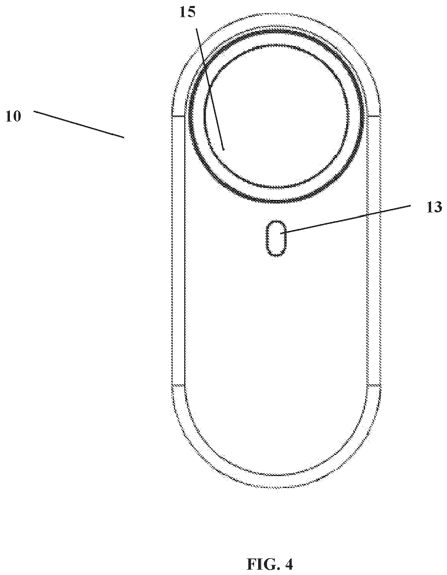

Referring now to **FIG. 4****,** the portable power bank (10) can include a power indicator (15). The power indicator (15) can glow when the portable power bank (10) is being charged and/or charging one or more other electronic devices via the cable(s) (12, 12') (illustrated in **FIG. 1**). The power indicator (15) can be annular such that a portion of the housing of the portable power bank (10) resides inside of the power indicator (15).

The portable power bank (10) can also comprise a button (13) in communication with the power indicator (15). The button (13) can trigger the power indicator (15) to glow to indicate a level of charge of the rechargeable battery disposed in the housing of the portable power bank (10). The level of charge can comprise a plurality of levels, such as "Low," "Medium," and "High." To indicate the level of charge, the power indicator (15) can glow a plurality of bars. For example, one bar can relate to a "Low" charge, two bars can relate to a "Medium" charge, and three bars can relate to a "High" charge. Other formats for displaying the charge level are also possible. The button (10) can also turn on or off the rechargeable battery. As such, according to an embodiment, when a PED is connected to the portable power bank (10) and a user presses the button (10), the rechargeable battery can be turned on and the power indicator (15) can glow to indicate the level of charge of the rechargeable battery. Alternatively, the portable power bank (10) can be configured to automatically detect the connection of a PED and automatically charge the PED.

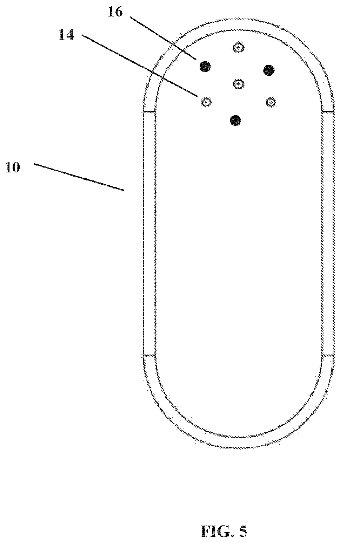

Referring now to **FIG. 5****,** the portable power bank (10) can comprise a plurality contacts (14) and, optionally, one or more magnets (17). The contacts (14) and magnet(s) (17) can be located on any location on the housing. Along these lines, the contacts (14) and magnet(s) (17) can be located at the same or different location on the housing. For example, the contacts (14) and magnet(s) can be disposed on a side of the housing opposite to the button (13) (illustrated in **FIG. 4**). As illustrated in FIG. 5, the contacts (14) and magnet(s) (17) can be located on a back end of the housing. According to an embodiment, although the contacts (14) may at least partially protrude through the housing of the portable power bank (10), the magnet(s) (17) can be integrated into the housing of the portable power bank (10).

The contacts (14) of the portable power bank (10) can enable recharging of the internal battery of the portable power bank (10) by placing the contacts (14) on a conductive charging pad. For example, the contacts (14) can enable recharging of the internal battery of the portable power bank (10) by placing the contacts (14) on contact pads of a conductive charging pad that provide different voltage levels. Further details on the contacts (14) of the portable power bank (10) can be found in U.S. Patent No. 7,932,638, the disclosure of which is incorporated by reference herein. Alternatively, or in addition to the contacts (14), the magnet(s) (17) of the portable power bank (10) can permit the portable power bank (10) to magnetically couple to the conductive charging pad.

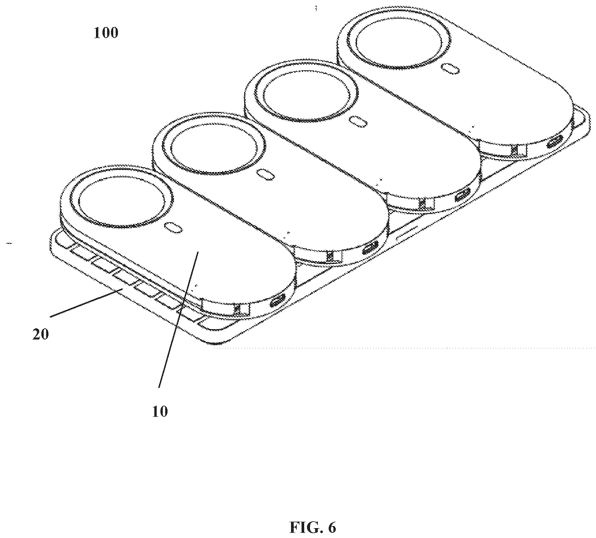

Referring now to **FIGs. 6 - 8****,** a system (100) for charging one or more electronic devices can be provided. The system can comprise one or more of the portable power banks (10) discussed above and a conductive charging pad (20). The conductive charging pad (20) can include a power management module. The power management module can be configured to receive electrical power from an external power source, and to be in communication with a power module of the portable power bank (10) when the portable power bank (10) is placed on the conductive charging pad (30). The conductive charging pad (20) can further comprise a plurality of contact pads configured to provide a specific voltage or current. At least two of the contact pads can provide different voltages or currents. Further details on the conductive charging pad (20) and its contact pads can be found in U.S. Patent Nos. 7,932,638 and 7,986,059, the disclosures of which are incorporated by reference herein.

As discussed above, the portable power bank (10) can comprise a plurality of contacts. When the contacts of the portable power bank (10) are placed on the conductive charging pad (20), the plurality of contact pads of the conductive charging pad (20) can conductively transfer electrical power to the portable power bank (10). This can be done through the contacts of the portable power bank (10).

As shown in the embodiments of **FIGs. 6 - 8****,** the conductive charging pad (20) can be adapted to recharge one or more portable power banks (10), for example, four to fifteen portable power banks (10). The conductive charging pad (20) can charge each portable power bank (10) irrespective of their orientations so long as at least two contacts of each portable power bank (10) are in contact with contact pads of the charging pad (20) having different voltage levels. This can allow a user to drop and place the portable power bank (10) on the conductive charging pad (20) in any orientation to charge its internal battery. Thus, the system (100) can eliminate the need of charging cables / adapters when charging the portable power bank(s) (10).

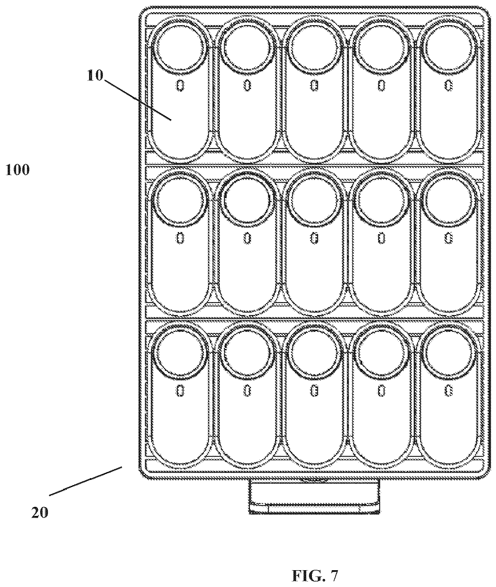

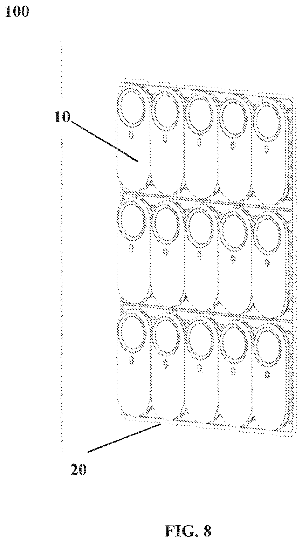

Additionally or alternatively, the system (100) can eliminate the need to place the portable power bank (10) in a specific orientation on the conductive charging pad (20). As mentioned above, the system (100) can also allow the user to charge multiple power banks (10) simultaneously on the conductive charging pad (20). The conductive charging pad (20) can be placed on a table (as illustrated in **FIG. 6**), a stand (as illustrated in **FIG. 7**), or a wall (as illustrated in **FIG. 8**). Moreover, the charging pads (20) can be installed in the form of compact charging stations at public places, such as bus stops, airports, departmental shops, hypermarts, etc. The charging station can be kiosk-style, and can be located on a sidewalk, within a building lobby, or in any other suitable publicly accessible location. Alternatively, although not illustrated, the conductive charging pad (20) can be embedded into a surface of a piece of furniture, such as a table, desk, or nightstand. Along these lines, the conductive charging pad (20) can also be embedded into an exposed portion of a wall.

From the foregoing description, one skilled in the art can readily ascertain the essential characteristics of the invention, and without departing from the spirit and scope thereof, can make changes and modifications of the invention to adapt it to various conditions and to utilize the present invention to its fullest extent. The specific embodiments described herein are to be construed as merely illustrative, and not limiting of the scope of the invention in any way whatsoever. Moreover, features described in connection with one embodiment of the invention may be used in conjunction with other embodiments, even if not explicitly stated above.

## Claims

1. A portable power bank, comprising:
a housing;
a rechargeable battery disposed within the housing;
a plurality of contacts disposed on the housing and in electrical communication with the rechargeable battery; and
a first connector in electrical communication with the rechargeable battery and configured to be plugged into a port of a first electronic device,
wherein the contacts are configured to receive electrical power from a conductive charging pad capable of supplying the electrical power when the contacts are in contact with the conductive charging pad.

2. The portable power bank of claim 1, wherein the contacts are configured to conductively receive the electrical power from a plurality of contact pads of the conductive charging pad having different voltage levels.

3. The portable power bank of claim 2, wherein the contacts are arranged on the housing such that at least two of the contacts are in contact with at least two of the plurality of contact pads of the charging pad having different voltage levels irrespective of an orientation of the housing on the conductive charging pad.

4. The portable power bank of any of the preceding claims, further comprising:
one or more magnets configured to magnetically couple the portable power bank to one or more contact pads of the conductive charging pad.

5. The portable power bank of any of the preceding claims, further comprising:
a power module disposed within the housing and configured to manage the electrical power with respect to the rechargeable battery,
wherein the rechargeable battery is in electrical communication with the power module, and
wherein the plurality of contacts and the first cable are in electrical communication with the rechargeable battery via the power module.

6. The portable power bank of any of the preceding claims, further comprising:
a first cable extending from the housing and in electrical communication with the rechargeable battery,
wherein the first connector is connected to the first cable, and
wherein the housing comprises a first compartment that is shaped and configured to hold the first cable and the first connector such that the first cable and the first connector are capable of being removably recessed within the first compartment.

7. The portable power bank of claim 6, additionally comprising:
a second cable extending from the housing and in electrical communication with the rechargeable battery; and
a second connector disposed on the second cable and configured to be plugged into a port of a second electronic device.

8. The portable power bank of claim 7, wherein the housing comprises a second compartment within the housing, wherein the second compartment is shaped and configured to hold the second cable and the second connector such that the second cable and the second connector are capable of being removably recessed within the second compartment.

9. The portable power bank of any of the preceding claims, further comprising:
an external charge port disposed on the housing.

10. The portable power bank of any of the preceding claims, further comprising:
a power indicator disposed on the housing and configured to display a charge level of the rechargeable battery.

11. The portable power bank of claim 10, further comprising:
a button disposed on the housing and configured to enable the power indicator to display the charge level of the rechargeable battery.

12. A system, comprising:
a portable power bank as claimed in any of the preceding claims; and
a conductive charging pad configured to provide an electrical power to the portable power bank when the contacts of the portable power bank are placed on the conductive charging pad.

13. The system of claim 12, wherein the conductive charging pad comprises a plurality of contact pads having different voltage levels.

14. The system of claim 12 or 13, wherein the conductive charging pad is configured to simultaneously charge a plurality of portable power banks when contacts disposed on each of the plurality of portable power banks are placed on the conductive charging pad.

15. The system of any of claims 12 to 14, wherein the conductive charging pad is portable.
